# EUROPÄISCHE PATENTSCHRIFT

(11) **EP 3 861 232 B1**
(45) Veröffentlichungstag und Bekanntmachung des Hinweises auf die Patenterteilung: **10.08.2022**
(21) Anmeldenummer: 19786511.6
(22) Anmeldetag: 04.10.2019
(51) Int. Cl.: F16H 25/24

(54) **SPINDELGETRIEBE**
SPINDLE GEAR MECHANISM
ENTRAÎNEMENT À BROCHE

(30) Priorität: 04.10.2018 DE 202018105683 U
(43) Veröffentlichungstag der Anmeldung: 11.08.2021
(73) Patentinhaber: Igus GmbH, 51147 Köln (DE)
(72) Erfinder: NIERMANN, Stefan, 50968 Köln (DE); POLLE, Sebastian, 50996 Köln (DE)
(74) Vertreter: Lippert Stachow Patentanwälte Rechtsanwälte
(86) Internationale Anmeldenummer: PCT/EP2019/076885
(87) Internationale Veröffentlichungsnummer: WO 2020/070273

(56) Entgegenhaltungen:
- EP-A1- 2 075 488
- DE-A1-102008 000 346
- DE-C- 922 095
- DE-U1-202006 009 772
- TW-A- 200 500 002

## Beschreibung

Die Erfindung betrifft ein Spindelgetriebe mit einem Spindelbauteil mit einem Spindelgewinde, das eine sich über eine Längsachse des Spindelbauteils verändernde Steigung aufweist, und mit einem in das Spindelgewinde eingreifenden Gewindebauteil, wobei die beiden Bauteile bezüglich der Längsachse des Spindelbauteils relativ zueinander verfahrbar sind und das Gewindebauteil zumindest ein frei bewegliches Gewindelement aufweist, das in das Spindelgewinde eingreift und sich im Betrieb selbsttätig der Gewindesteigung des Spindelgewindes anpasst, wobei das Gewindeelement einen Gewindeabschnitt aufweist, der, jeweils bezüglich der Längsachse des Spindelbauteils, in Arbeitslage kraftübertragungswirksam in das Spindelgewinde eingreift und der in Einbaulage an der dem Spindelgewinde zugewandten Seite einer Basis des Gewindeelements angeordnet ist, wobei der Gewindeabschnitt eine linienhafte Längserstreckung in Richtung des schraubenförmigen Verlaufs des Spindelgewindes in Einbaulage aufweist und sich bezüglich der Längsachse des Spindelbauteils in Umfangsrichtung bogenförmig erstreckt.

Das Verfahren der beiden Bauteile, d.h. Gewindebauteil und Spindelbauteil, relativ zueinander in Längsrichtung des Spindelbauteils erfolgt üblicherweise unter relativer Verdrehung dieser beiden Bauteile um eine Drehachse. Das Verfahren von Spindelbauteil zu Gewindebauteil relativ zueinander erfolgt in der Regel über einen linearen Verfahrweg.

Aus der DE 20 2006 009 772 U1 ist ein Spindelgewinde der eingangs genannten Art bekannt, wobei Bereiche unterschiedlicher Steigungen des Spindelgewindes und eine den unterschiedlichen Steigungen sich automatisch anpassende Spindelmutter vorgesehen sind, durch welche die Geschwindigkeit und Stellkraft des Spindelgetriebes, je nach dem in welchem Bereich des Spindelbauteils die Spindelmutter sich befindet, verändert wird. Die Bereiche des Spindelbauteils, in denen eine höhere Geschwindigkeit erreicht wird, weisen einen kleineren Durchmesser und die Bereiche, in denen eine höhere Kraft anliegt, einen größeren Durchmesser auf. Die Spindelmutter besteht aus einem festen Mutterteil für den Bereich höherer Kraft und einem mit ihm verbundenen verstellbaren Bereich für die höhere Geschwindigkeit, wobei letzterer aus Muttersegmenten zusammengesetzt ist, die durch ein elastisches Element zusammengehalten werden und sich radial nach außen öffnen können.

Aus der EP 2 075 488 A1 ist ein Spindelgetriebe mit einem Spindelbauteil mit einem Spindelgewinde, das eine sich über eine Längsachse des Spindelbauteils verändernde Steigung aufweist, und mit einer in das Spindelgetriebe eingreifenden Mutter bekannt, wobei das Spindelbauteil und die Mutter bezüglich der Längsachse des Spindelbauteils relativ zueinander verfahrbar sind und die Mutter einen um eine senkrecht zur Längsachse des Spindelbauteils in ihr gelagerten Stift aufweist, der bezüglich der Längsachse des Spindelbauteils in Arbeitslage kraftübertragungswirksam in das Spindelgewinde eingreift. Die Mutter weist einen Körper mit einer bezüglich der Längsachse des Spindelbauteils radialen, längs einer Öffnungsachse ausgerichteten Aufnahmeöffnung auf, in der der Stift bezüglich der Öffnungsachse wälzdrehbeweglich gelagert angeordnet ist.

Die DE 10 2008 000 346 A1 offenbart ebenfalls ein Spindelgetriebe mit einem Spindelbauteil mit einem Spindelgewinde, das eine sich über eine Längsachse des Spindelbauteils verändernde Steigung aufweist, und mit einem in das Spindelgewinde eingreifenden und an einem das Spindelbauteil ringförmig umschließenden weiteren Bauteil angeordneten Tastelement, wobei das Spindelbauteil und das weitere Bauteil bezüglich der Längsachse des Spindelbauteils relativ zueinander verfahrbar sind. Das Tastelement kann aus einem drehbar mit dem weiteren Bauteil verbundenen Schaft, einem mit dem Schaft ortsfest verbundenen Träger und zwei auf dem Träger ortsfest angeordneten kegelstumpfartig geformten Fingern bestehen, welche von zwei gegenüberliegenden Seiten an einer Führungskurve des Spindelgewindes anliegen. Die Drehbarkeit des Schaftes gegenüber dem weiteren Bauteil gewährleistet dabei, dass sich das Tastelement bei einer Relativbewegung zwischen dem Spindelbauteil und dem weiteren Bauteil an eine Änderung der Steigung der Führungskurve anpassen kann.

Aus der DE 922 095 C ist ein Spindelgetriebe mit einem Spindelbauteil mit einem Spindelgewinde, das eine sich über eine Längsachse des Spindelbauteils verändernde Steigung aufweist, und mit einem in das Spindelgewinde eingreifenden Gewindebauteil bekannt, wobei die beiden Bauteile bezüglich der Längsachse des Spindelbauteils relativ zueinander verfahrbar sind. Das Gewindebauteil besteht aus einer sich der verändernden Steigung anpassenden Spiralfeder, deren Windungen in die Gänge des Spindelgewindes eingreifen und sich so der wechselnden Steigung derselben anpassen.

Die TW 200 500 002 A offenbart ebenfalls ein Spindelgetriebe mit einem Spindelbauteil mit einem Spindelgewinde, das eine sich über eine Längsachse des Spindelbauteils verändernde Steigung aufweist, und mit einer in das Spindelgewinde eingreifenden Mutter, wobei das Spindelbauteil und die Mutter bezüglich der Längsachse des Spindelbauteils relativ zueinander verfahrbar sind.

In der DE 11 2005 002 820 T5 wird ein Spindelgetriebe mit einer Schraube als Spindelbauteil vorgeschlagen. Die Steigungen des Spindelgewindes des Spindelbauteils ändern sich hierbei periodisch, wobei der Übergang zwischen den Steigungsabschnitten kontinuierlich erfolgt.

Ähnlich ist das Vorgehen in der JP 2006 046 546 A, wobei sich die Steigung des Innengewindes einer Mutter über die Längsachse des Spindelbauteils ändert.

Ausgehend vom vorgenannten Stand der Technik ist es eine Aufgabe der vorliegenden Erfindung, ein Spindelgetriebe mit Spindelbauteil und Gewindebauteil vorzuschlagen, welches unaufwändiger herstellbar ist und ferner für eine Vielzahl von Anwendungen geeignet ist.

Für ein Spindelgetriebe der eingangs genannten Art wird die Aufgabe bereits dadurch gelöst, dass das Gewindebauteil einen Körper mit einer bezüglich der Längsachse des Spindelbauteils radialen als Durchgangsöffnung ausgebildeten und längs einer Öffnungsachse ausgerichteten Aufnahmeöffnung aufweist, in der das Gewindeelement über seine Basis bezüglich der Öffnungsachse der Aufnahmeöffnung gleitdrehbeweglich oder wälzdrehbeweglich gelagert angeordnet ist.

Mit dieser Lösung kann sich das zumindest eine Gewindeelement der sich über einen Verfahrweg ändernden Gewindesteigung des Spindelbauteils anpassen, indem es sich an der jeweils aktuellen Gewindesteigung ausrichtet. Es kann sich daher bei einem Verfahren des Spindelbauteils relativ zu dem Gewindebauteil selbsttätig dem Steigungsverlauf des Spindelgewindes anpassen. Selbsttätig meint, dass sich das frei bewegliche Gewindeelement ohne weitere Maßnahme anpasst bzw. ausrichtet. Dank der erfindungsgemäßen Maßnahme ist es, wie weiter unten näher erläutert, konstruktiv auf einfache Weise realisierbar, ein Spindelgetriebe bereitzustellen, bei dem sich die Steigung des Spindelbauteils, im Rahmen der über das Spindelgetriebe ordnungsgemäß übertragbaren Kräfte, beliebig und beliebig häufig ändert. Nicht notwendig ist eine elastische Verformung des Gewindebauteils im Betrieb. Dies würde sich sogar hinsichtlich einer optimalen Kopplung von Spindelgewinde und Gewindebauteil nachteilig auswirken können.

Das erfindungsgemäße Spindelgetriebe kann für eine Vielzahl von Anwendungsmöglichkeiten konzipiert und/oder spezifisch an bestimmte Anwendungsmöglichkeiten angepasst erstellt werden. Beispielsweise kann über einen axialen Abschnitt des Spindelgewindes des Spindelbauteils eine relativ geringe Steigung vorgesehen sein, so dass bei einer relativen Umdrehung ein entsprechend geringer relativer Weg, aber höhere Kräfte übertragen werden können. Hingegen kann das Spindelgewinde in einem anderen axialen Abschnitt des Spindelgewindes eine relativ hohe Steigung aufweisen, so dass bei einer relativen Umdrehung ein entsprechend großer relativer Weg, aber geringere Kräfte übertragen werden können. Die Werte der verschiedenen Steigungen können in einem Bereich angesiedelt sein, der als untere Grenze eine geringe Steigung mit Selbsthemmung und als obere Grenze eine Steigung einschließt, die so groß ist, dass das Spindelgetriebe sehr leichtgängig wird. Eine Steigung mit Selbsthemmung als Wirkung beim Verfahren kann beispielsweise bezüglich des Verfahrweges zur Ausbildung eines Zwischenstopps oder endseitigen Stopp eingesetzt werden. Eine große Steigung mit Leichtgängigkeit beim Verfahren kann beispielweise für eine rasche lineare Relativbewegung eingesetzt werden. Die Steigung kann sich über das gesamte Spindelgewinde, alternativ über zumindest einen Abschnitt oder mehreren Abschnitten des Spindelgewindes ändern. Das Spindelgetriebe kann somit konstruktiv einfach an spezifische Anwendungen angepasst ausgebildet werden.

Insbesondere ist das zumindest eine Gewindeelement und das Spindelgewinde insbesondere Kraft übertragungswirksam miteinander gekoppelt. Das zumindest eine Gewindeelement greift bezüglich der Längsachse des Spindelbauteils Kraft und im Prinzip auch Drehmoment übertragungswirksam in das Spindelgewinde ein. Kraft übertragungswirksam meint die Übertragung von axialen Kräften insbesondere bezüglich der Längsachse des Spindelbauteils. Drehmoment übertragungswirksam meint die Übertragung von Drehmomenten insbesondere bezüglich der Längsachse des Spindelbauteils, die jedoch durch Reibung zwischen den Bewegungspartner erfolgt. Zur Aufnahme des Drehmomentes ist üblich eine Drehmomentabstützung vorgesehen, indem das Spindelbauteil oder, bei umgekehrter Bauweise mit dem Gewindebauteil als drehendes Bauteil und das Spindelbauteil als linear bewegbares Bauteil, das Spindelbauteil beispielsweise an einer Basis drehfest angelagert wird. Spindelbauteil und Gewindebauteil können wie üblich koaxial zur Längsachse angeordnet sein. Die Längsachse kann die Mittellängsachse des Spindelbauteils sein. Die Längsachse bildet die Drehachse für das Spindelgetriebe. Das Gewindebauteil oder das Spindelbauteil können axial festgelegt bespielweise zu einer Basis gehalten angeordnet sein. Diese Basis kann beispielsweise ein Maschinenteil sein. Insbesondere kann die Basis ein Arbeitsende eines Roboterarms sein. Das Spindelbauteil kann eine Spindel mit Außengewinde sein.

Das Gewindebauteil weist einen Körper auf. Konstruktiv einfach ist das zumindest eine Gewindeelement um eine und/oder in Richtung einer Querachse senkrecht zu der Längsachse des Spindelbauteils bewegbar an oder in dem Körper gelagert angeordnet. Um der Änderung der Gewindesteigung des Spindelgewindes beim Verfahren über deren Länge folgen zu können, ist das Gewindeelement zumindest um die Querachse bewegbar angeordnet. Insbesondere ist das zumindest eine Gewindeelement quer zur Längsachse bzw. zur Mittellängsachse zumindest drehbeweglich oder schwenkbeweglich an dem Gewindebauteil gelagert angeordnet.

Das zumindest eine Gewindeelement weist einen Gewindeabschnitt auf, der, jeweils bezüglich der Längsachse des Spindelbauteils, in Arbeitslage Drehmoment übertragungswirksam in das Spindelgetriebe eingreift. Mit dem Gewindeabschnitt ist ein Teilstück aus einem schraubenförmigen Verlauf des Gewindes gemeint. Der Gewindeabschnitt kann entsprechend kreisringsegmentartig ausgebildet sein. Der Gewindeabschnitt kann zum Kraft übertragungssicheren Eingriff in das Spindelgewinde weitergebildet sein.

Das Gewindeelement bzw. der Gewindeabschnitt des Gewindeelementes kann dem Spindelgewinde angepasst ausgebildet sein. Es kann beispielsweise einen konstanten gleichen Flankenwinkel aufweisen. Dieser kann gleich dem Flankenwinkel des Spindelgewindes sein. Das Gewindebauteil kann gleich einer Gewindemutter bezüglich der Längsrichtung des Spindelbauteils radial nach Innen in das Außengewinde des Spindelbauteils eingreifen. Zumindest in diesem Falle kann das Gewindebauteil als Gewindemutter bezeichnet werden. In umgekehrter Anordnung kann die Erfindung als Spindelbauteil eine Hohlspindel mit Innengewinde umfassen, in die das Gewindebauteil mit dem zumindest einem Gewindeelement bezüglich der Längsrichtung des Spindelbauteils radial nach Außen eingreift.

Konstruktions- und herstellungsseitig einfach weist der Gewindeabschnitt einen linienhaften Verlauf auf. Der Gewindeabschnitt erstreckt sich bezüglich der Längsachse des Spindelbauteils in Umfangsrichtung bogenförmig. Unter anderem abhängig von der Anzahl vorgesehener möglicher Gewindegänge, kann sich der Gewindeabschnitt bezüglich der Längsachse in Umfangsrichtung im Bogenmaß über <n/2 erstrecken.

Der Gewindeabschnitt kann sich hinsichtlich seiner linienhaften Längserstreckung bis an oder nahezu an den äußeren Rand des Gewindeelementes erstrecken. Nahezu meint, dass die Beabstandung des Gewindeabschnitts von dem äußeren Rand des Gewindeelements an der Stelle, an der die linienhaften Längserstreckung stirnseitig zum äußeren Rand hin weist, weniger als 10% oder weniger als 2% der linienhaften Längserstreckung des Gewindeabschnitts ist. Dies dient unter anderem zum mechanischen Schutz der bezüglich der Längserstreckung des Gewindeabschnitts stirnseitigen Enden desselben.

Vorteilhaft einfach kann der Gewindeabschnitt einen Gewindezahnabschnitt und/oder einen Gewinderillenabschnitt aufweisen. Der Gewindezahnabschnitt kann durch einen rippenartigen Vorsprung gebildet sein. Der Gewinderillenabschnitt kann durch eine durchgehende Nut gebildet sein.

Insbesondere kann sich der Gewindeabschnitt bezüglich der Längsachse des Spindelbauteils umfänglich über einen Bereich ≤ 85% ±5% oder über einen Bereich ≤ 60% ±5% jeweils des Nenndurchmessers des Spindelbauteils erstrecken. Diese Erstreckung des Gewindeabschnitts bis zu 85% ±5% des Durchmessers oder Nenndurchmessers des Spindelbauteils ist günstig bei einem Spindelgewinde von bis zu vier Gewindegängen. Bei mehr als vier Gewindegängen, wie beispielsweise bei einem sechsgängigen Spindelbauteil, kann die Länge des Abschnitts ≤ 60% ±5% des Durchmessers oder Nenndurchmessers des Spindelbauteils betragen.

Wird das Spindelgewinde schräg zur Längsachse und in einer Ebene mit seiner Steigung geschnitten, so entsteht eine elliptische oder etwa elliptische Schnittfläche. Hieran angepasst, kann die dem Spindelbauteil zugewandte in Einbaulage zur Längsachse des Spindelbauteils umfängliche Außenkontur des Gewindeabschnitts konkav nach innen, d.h. zu seiner Basis hin, gewölbt ausgebildet sein. Die umfängliche Außenkontur des Gewindeabschnitts kann in Anpassung an eine Steigung des Spindelgewindes konkav und ferner elliptisch oder etwa elliptisch ausgebildet sein. Die umfängliche Außenkontur des Gewindeabschnitts kann bogenförmig ausgebildet sein. Sie kann sich im Bogenmaß über <n/2 erstrecken. Vorteilhaft hinsichtlich eines optimalen, d.h. reibungsarmen Eingriffs des Gewindeabschnitts in das Spindelgewinde, kann die Außenkontur der größten Steigung des Spindelgewindes angepasst sein. Darüber hinaus kann die Außenkontur dem Bereich der elliptischen Schnittfläche angepasst werden, in dem die Außenkontur der elliptischen Schnittfläche den größten Krümmungsradius aufweist. Dieser Bereich ist bekanntlich dort, wo die elliptische Schnittfläche den kleinsten Durchmesser aufweist.

In Einbaulage längserstreckt sich der Gewindeabschnitt vorteilhaft in Richtung der Schraubenlinie. Er kann sich somit im Betrieb, abhängig von der tatsächlichen Steigung an dem Ort des Spindelgewindes, an dem der Gewindeabschnitt in das Spindelgewinde eingreift, bezüglich der Längsachse in der Regel im Wesentlichen in Umfangsrichtung zur Längsachse des Spindelbauteils erstrecken.

Der Gewindeabschnitt des Spindelgetriebes kann zu seiner leichteren Ausrichtung bei einer Steigungsänderung des Spindelgewindes bezüglich seiner Längserstreckung beidendseitig sich verjüngend ausgebildet sein. Hierzu kann der Gewindeabschnitt, bezüglich eines Längsschnitts in Richtung seiner linienhaften Längserstreckung, eine ovale oder elliptische Außenkontur aufweisen. Die Außenkontur kann insbesondere linsenförmig ausgebildet sein. In Einbaulage ist dieser Längsschnitt bezüglich der Querrichtung ein Querschnitt. Der Gewindeabschnitt kann sich alternativ beispielsweise keilartig verjüngend ausgebildet sein.

Konstruktiv einfach weist das Gewindeelement eine Basis auf, an deren in Einbaulage dem Spindelgewinde zugewandten Seite der Gewindeabschnitt angeordnet ist. Die Basis ist Träger für den Gewindeabschnitt.

In vorteilhaft einfacher Bauweise weist der Körper eine Aufnahmeöffnung auf, in der das Gewindeelement zumindest dreh- oder schwenkbeweglich angeordnet ist. Die Aufnahmeöffnung ist in Einbaulage bezüglich der Längsachse radial ausgerichtet. Radial heißt in Querrichtung zur Längsrichtung des Spindelbauteils. Die Öffnungsachse der Aufnahmeöffnung verläuft somit quer zur Längsrichtung des Spindelbauteils. Die Basis dient zur Führung des Gewindeelementes in der Aufnahmeöffnung. Die Aufnahmeöffnung ist als Durchgangsöffnung ausgebildet. Das Gewindeelement ist über seine Basis bezüglich der radialen Öffnungsachse gleitdrehbeweglich oder wälzdrehbeweglich in der Aufnahmeöffnung gelagert angeordnet. Hierzu können die Aufnahmeöffnung und die Basis des Gewindeelements einander angepasste kreisrunde Querschnitte aufweisen. Konstruktiv einfach kann das Gewindeelement zu seiner gleitdrehbeweglichen Lagerung in der Aufnahmeöffnung eine dem kreisrunden Querschnitt der Aufnahmeöffnung angepasste kreisrunde Außenkontur aufweisen.

In einer Weiterbildung des Spindelgetriebes kann, zur wälzdrehbeweglichen Lagerung des Gewindeelements, ein Wälzlager mit Innenring und Außenring vorgesehen sein. Das Gewindeelement kann bezüglich einer Öffnungsachse der Aufnahmeöffnung radial außen an dem Innenring des Wälzlagers festgelegt sein. Alternativ kann das Gewindeelement den Innenring des Wälzlagers bilden. In beiden Fällen kann der Außenring des Wälzlagers innenseitig der Aufnahmeöffnung zumindest drehfest mit derselben verbunden sein. Hierzu kann die Aufnahmeöffnung als Stufenöffnung ausgebildet sein, wobei der Außenring an der Stufe der Aufnahmeöffnung axial verschiebungsfest gehalten wird. Das Wälzlager kann ein übliches Wälzlager mit Rollen oder Kugeln sein.

Das Wälzlager kann als Radiallager ausgebildet sein. Hierdurch wird das Gewindeelement quer zur Öffnungsachse abgestützt und in Richtung der Öffnungsachse verschieblich in dem Wälzlager gelagert. Vorteilhaft hinsichtlich einer möglichen Spielminimierung des Gewindeeingriffs von Gewindeabschnitt des Gewindebauteils in das Spindelgewinde des Spindelbauteils kann vorgesehen sein, dass das Gewindeelement unter Federbelastung bezüglich der Längsrichtung radial in das Spindelgewinde eingreift. Damit kann das Gewindeelement radial vorgespannt gehalten angeordnet sein. Diese Maßnahme ist unabhängig von der Anzahl der Gewindegänge. Die Vorspannung kann unter Verwendung einer Blattfeder, wie Tellerfeder, oder einer Druckfeder, wie Schraubendruckfeder, oder beispielsweise einer Scheibe aus einem gummielastischen Werkstoff, wie Gummi, Elastomer, Kautschuk oder Silikonkautschuk, realisiert werden.

Vorteilhaft einfach kann das Gewindeelement in Einbaulage gegen eine axiale Verschiebung in radialer Richtung von dem Spindelgewinde weg gesichert in der Aufnahmeöffnung angeordnet sein. Es kann das Gewindeelement mittels eines Sicherungsrings, wie Klemmring oder Simmerring, gegen diese axiale Verschiebung gesichert gehalten angeordnet sein.

Der Körper des Gewindebauteils kann gleitverschieblich auf dem Spindelbauteil gelagert angeordnet sein. Diese Gleitverschieblichkeit kann in Richtung der Längsachse und umfänglich zu derselben gegeben sein. Zur gleitverschieblichen Lagerung kann zumindest eine mit dem Gewindebauteil verbundene und zwischen Körper und Spindelbauteil angeordnete Gleitlagerhülse vorgesehen sein. Damit kann der Körper in einem über die radiale Dicke der Gleitlagerhülse bestimmten radialen Abstand zum Spindelgewinde des Gewindebauteils gehalten werden. Diese gleitverschiebliche Lagerung ist unabhängig von der Gangzahl und den Steigungen des Spindelgewindes.

Das Spindelgewinde des Spindelbauteils kann als Trapezgewinde ausgebildet sein. Dies hat den Vorteil, dass leichter größere Steigungen realisierbar sind. Ferner können hierüber leichter größere Kräfte übertragen werden. Allgemein kann der Flankenwinkel des Gewindegangs über dessen gesamte axiale Erstreckung konstant sein. Diese Flankenwinkel kann beispielsweise kleiner/gleich 45° oder kleiner/gleich 30° sein. Insbesondere kann der Flankenwinkel gleich 30° sein. In Anpassung an das amerikanische ACME-Gewinde kann der Flankenwinkel auch gleich 29° sein.

Das Spindelgewinde kann zumindest einen Gewindegang umfassen. Dieser kann der einen über seine gesamte axiale Erstreckung in Längsrichtung des Spindelbauteils stetigen Verlauf aufweisen. "Stetig" ist hier im mathematischen Sinne gemeint, d.h. es treten über den Verlauf der Steigung über die axiale Länge des Spindelbauteils keine Abknickung, Unterbrechung und/oder Sprung auf.

In einer vorteilhaften Weiterbildung des Spindelgetriebes kann das Spindelgewinde des Spindelbauteils zumindest zwei Gewindegänge aufweisen. Es kann pro Gewindegang ein Gewindeelement vorgesehen sein. Damit können bei einem zweigängigen Spindelgewinde zwei Gewindeelemente vorgesehen sein, die kraftübertragungswirksam jeweils in einen ihnen zugeordneten Gewindegang eingreifen. Vorteilhaft und hinsichtlich eines ordnungsgemäßen Verfahrens notwendig ist vorgesehen, dass die beiden Gewindeelemente, jeweils bezüglich der Längsachse des Spindelbauteils, auf gleicher Höhe und umfänglich gleich beabstandet an dem Körper des Gewindebauteils angeordnet sind. Herstellungsseitig und montageseitig vorteilhaft, können die beiden Gewindeelemente baugleich ausgebildet sein. Insbesondere sind alle in dem Spindelgetriebe eingesetzten Gewindeelemente baugleich ausgebildet.

Der Körper kann in seiner Grundform eine Ringform aufweisen. Er kann radial außen Außenseitenfläche, die in Einbaulage senkrecht zur Querrichtung angeordnet sind, und radial innen eine kreisrunde Öffnung zur Aufnahme des Spindelbauteils aufweisen. Die Außenseitenflächen sind vorzugsweise gleich ausgebildet. Sie bilden einen polygonen Querschnitt mit gleichen Seiten. In zumindest einer der Außenseitenflächen, vorzugsweise in alle Außenseitenflächen kann jeweils eine Aufnahmeöffnung eingebracht sein, wobei die Aufnahmeöffnung bezüglich der Längsachse des Spindelgewindes umfänglich gleich beabstandet sind. Dieser Aufbau vereinfacht Fertigung und Montage.

Ist beispielsweise ein viergängiges oder ein sechsgängiges Spindelgewinde vorgesehen, so kann der Querschnitt der Außenkontur ein Quadrat bzw. ein Sechseck sein. Die Anzahl der möglichen Gewindegänge hängt bekanntlich u.a. von dem Nenndurchmesser des Spindelbauteils ab.

Herstellungsseitig einfach können das Spindelbauteil, der Körper des Gewindebauteils und/oder die Gewindeelemente jeweils einstückig, insbesondere als einstückiges Spritzgussbauteil ausgebildet sein.

Das Gewindeelement bzw. die Gewindeelemente können jeweils aus Metall, insbesondere aus Aluminium mit Hardeloxal, oder aus Kunststoff gefertigt sein. Der Körper kann aus Metall, insbesondere aus Stahl oder Aluminium mit Eloxal, oder aus Kunststoff gefertigt sein. Das Spindelbauteil kann aus Metall, wie Aluminium oder Stahl, oder aus Kunststoff gefertigt sein.

In vorteilhaften Ausführungsformen weist das Spindelgetriebe eines oder mehrere der vorstehend als bevorzugt dargestellten Merkmale (in jeglicher Kombination) auf.

Weitere Einzelheiten und Vorteile der Erfindung werden im Folgenden, ohne Einschränkung des Schutzumfangs, durch die Beschreibung mehrerer bevorzugter Ausführungsformen unter Bezugnahme auf die beigefügten Zeichnungen ersichtlich. Hierbei zeigen:
- FIG.1A-1C: jeweils eine Ansicht einer Ausführungsform eines Spindelgetriebes mit einem Spindelbauteil und einem Körper und Gewindeelemente aufweisenden Gewindebauteil,
- FIG.2A-2C: jeweils eine Ansicht eines der Gewindeelement des Spindelgetriebes gemäß Figur 1A-1C.
- FIG.3A-3B: jeweils eine Ansicht des Gewindebauteils des Spindelgetriebes gemäß Figur 1A bis 1C,
- FIG. 3C: eine Seitenansicht des Gewindebauteils ähnlich dem gemäß Figuren 3A-3C, jedoch mit einem einzigen Gewindeelement
- FIG.4A-4B: jeweils einen Ausschnitt in einer Schnittansicht einer weiteren Ausführungsform des Spindelgetriebes,
- FIG.5A-5C: jeweils eine Darstellung einer weiteren Ausführungsform des Spindelgetriebes in Seitenansicht oder Schnittansicht,
- FIG.6A-6D: jeweils eine Ansicht einer weiteren Ausführungsform des Spindelgetriebes,
- FIG.7A-7C: jeweils eine Ansicht des Gewindebauteils des Spindelgetriebes gemäß Figuren 6A-6D
- FIG.8A-8B: jeweils eine Ansicht des Gewindeelements des Spindelgetriebes gemäß Figuren 6A-6D,
- FIG.9A-9E: jeweils eine Ansicht einer weiteren Ausführungsform des Spindelgetriebes und
- FIG.9F: eine Ansicht des Gewindeelements des Spindelgetriebes gemäß den Figuren 9A-9E.

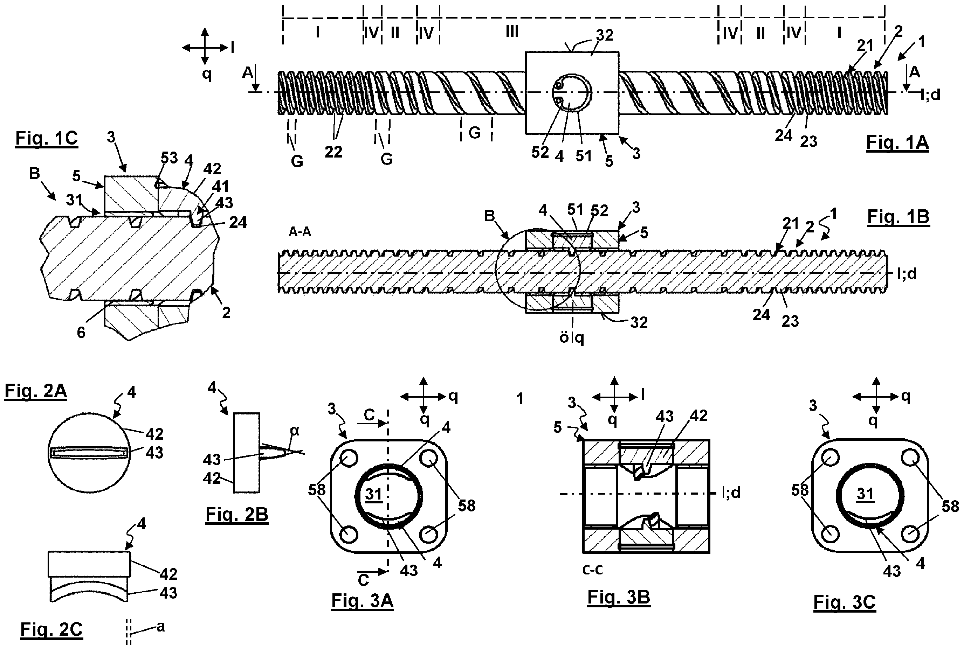

In den Figuren 1-9 sind Darstellungen eines Spindelgetriebes 1 in verschiedenen Ansichten, Schnitten und Einzelfiguren wiedergegeben. Das Spindelgetriebe 1 weist ein Spindelbauteil 2 mit einem Spindelgewinde 21 auf, das eine sich über eine Längsachse 1 des Spindelbauteils 2 verändernde Steigung umfasst. Ferner weist das Spindelgetriebes 1 ein in das Spindelgewinde 21 eingreifendes Gewindebauteil 3 auf, wobei die beiden Bauteile 2; 3 bezüglich der Längsachse 1 der Spindelbauteiles 2 relativ zueinander verfahrbar sind. Erfindungsgemäß weist das Gewindebauteil 3 zumindest ein frei bewegliches Gewindeelement 4 auf. Eine derartige Ausführungsform des Spindelgetriebes 1 wird in Figur 3C und zwar anhand einer Seitenansicht eines Gewindebauteils 3 mit einem Gewindeelement 4 zum Eingriff in ein eingängiges Spindelgewinde 21 des Spindelbauteils 2 gezeigt. Bei den übrigen hier gezeigten Ausführungsformen des Spindelgetriebes 1 sind zumindest zwei frei bewegliche Gewindeelemente 4 vorgesehen. Die Gewindeelemente 4 greifen jeweils in das Spindelgewinde 21 ein und passen sich im Betrieb selbsttätig der sich über die Längsachse 1 des Spindelbauteils 2 ändernden Gewindesteigung des Spindelgewindes 21 an.

Bei den hier gezeigten Ausführungsformen ist das Spindelgewinde 21 radial außen an dem Spindelbauteil 2 angeordnet. Das Gewindebauteil 2 ist, bezüglich der Längsachse 1, koaxial und radial außen zu dem Spindelbauteil 2 angeordnet. Das Gewindebauteil 3 weist hierzu eine Durchgangsöffnung 31 auf, die von dem Spindelbauteil 2 durchgriffen wird. In den hier gezeigten Ausführungsformen des Spindelgetriebes 1 ist das Spindelbauteil 2 kraftmechanisch günstig mehrgängig ausgebildet, wobei in jedem Gewindegang 22 ein Gewindeelement 4 zugeordnet ist. Die Gewindeelemente 4 sind, bezüglich der Längsrichtung 1, auf einer Höhe und umfänglich gleich beabstandet an dem Gewindebauteil 3 gelagert angeordnet. Die zumindest zwei Gewindeelemente 4 sind zudem einstückig und baugleich. Die Erfindung ist jedoch nicht auf eine dieser Maßnahmen beschränkt.

Die Steigung kann sich über die gesamte Längserstreckung des Spindelgewindes 21 ändern. In den hier gezeigten Ausführungsformen des Spindelgetriebes 1 ist jedoch vorgesehen, dass die Steigung in bestimmten Abschnitten I-III des Spindelgewindes 21 zwar unterschiedlich groß ist, aber konstant bleibt. In Figur 1A sind die unterschiedlich großen Steigungen der Bereiche I-III in Form der jeweiligen Ganghöhe G, d.h. in Form des axialen Weges bei einer Umdrehung des Spindelbauteils 2, eingezeichnet. Ferner sind zwischen den Bereichen I-III jeweils ein Bereich IV vorgesehen, in dem die Steigung des einen Bereichs kontinuierlich bzw., im mathematischen Sinne, stetig in die des anderen Bereichs übergeht. Die Bereiche I-IV sind hier bezüglich einer Spiegelsymmetrieebene senkrecht zu Längsachse 1 der Gewindespindel 2 angeordnet. Hinsichtlich des axialen Steigungsverlaufs sind die Spindelgewinde 21 sämtlicher hier gezeigten Ausführungsformen des Spindelgetriebes 1 gleich ausgebildet, auf welches die Erfindung jedoch nicht beschränkt ist. Das Spindelgewinde 21 ist hier als ein einen Flankenwinkel a aufweisendes Trapezgewinde mit am freien Ende abgeflachten Gewindezahn 23 ausgebildet.

Das Gewindebauteil 3 weist einen Körper 5 auf, an dem die Gewindeelemente 4 jeweils hier um eine und in Richtung einer Querachse q senkrecht zu der Längsachse 1 des Spindelbauteils 2 drehbewegbar bzw. verschieblich gelagert angeordnet sind. Die Gewindeelemente 4 weisen jeweils einen Gewindeabschnitt 41 auf, der, bezüglich der Längsachse 1 des Spindelbauteils 2, in Arbeitslage radial nach innen Kraft übertragungswirksam in das Spindelgewinde 21 eingreift. Der Gewindeabschnitt 41 an sich kann als Teilstück aus dem wendelförmigen Verlauf eines hier nicht weiter dargestellten Muttergewindes in Form eines Gewindezahnabschnitts 43 aufgefasst werden, mit dem das Gewindeelement 4 in die Gewinderille 24 des ihm zugeordneten Gewindegangs 22 des Spindelgewinde 21 Kraft übertragungswirksam eingreift. Insofern kann das Gewindebauteil 3 mit den Gewindeelementen 4 auch als Gewindemutter bezeichnet werden. Das Gewindeelement 4 kann sich somit ohne äußere Einwirkung selbsttätig an der sich ändernden Gewindesteigung des Spindelbauteils 2 ausrichten. Der Gewindeabschnitt 41 ist an das Spindelgewinde 21 angepasst. Hierzu weist er beispielsweise den gleichen konstanten Flankenwinkel a wie das Spindelgewinde 21 auf. Der Flankenwinkel a ist bei den hier gezeigten Ausführungsformen gleich 30°.

Das Gewindeelement 4 weist eine Basis 42 auf. Diese ist Träger für den Gewindeabschnitt 41 und ist ferner einstückig mit denselben verbunden. Der Gewindeabschnitt 41 erstreckt sich rippenartig über die Seite der Basis 42, welche in Einbaulage dem Spindelgewinde 21 zugewandt ist. Die Basis 42 ist frei beweglich an dem Körper 5 angelagert. Der Gewindeabschnitt 41 ist mit dem Spindelgewinde 21 Kraft übertragungswirksam gekoppelt.

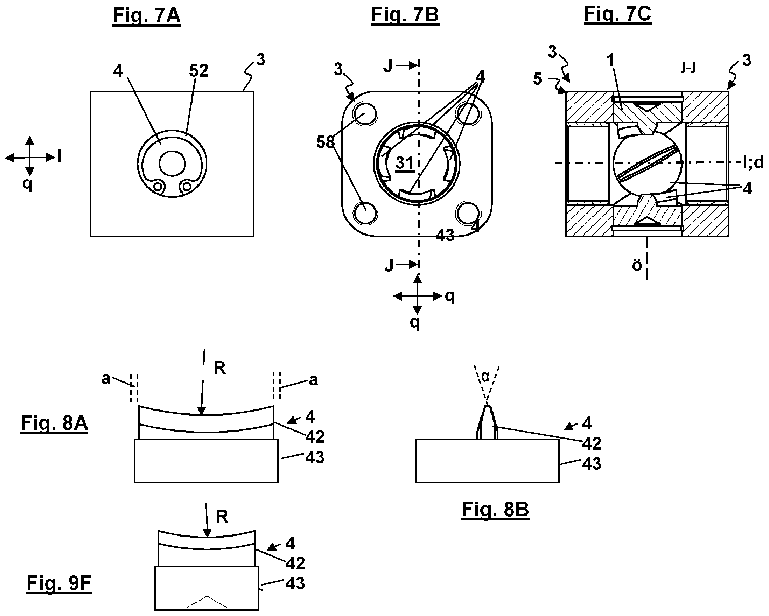

Der Gewindeabschnitt 41 weist einen linienartigen Verlauf auf. Wie den Figuren 2C und 8A entnehmbar, erstreckt sich der Gewindeabschnitt 41 bezüglich seiner Längserstreckung in Richtung seines linienartigen Verlaufs nicht über die gesamte Basis 42, sondern endet zu seinem Schutz beidendseitig in einem Abstand a zum Rand der Basis 42.

Wie deutlich den Einzeldarstellungen des Gewindeelements 4 in den Figuren 2C, 8A und 9F entnehmbar, ist der Gewindeabschnitt 41 bogenförmig und konkav nach innen zu seiner Basis 42 gewölbt ausgebildet. Die dem Spindelbauteil 2 zugewandte zur Längsachse 1 umfängliche Außenkontur des Gewindeabschnitt 41 ist in Anpassung an die Steigung des Spindelgewindes konkav ausgebildet. Der Gewindeabschnitt 41 ist in den hier gezeigten Ausführungsformen ähnlich einem Teilstück aus einem schraubenförmigen Verlauf eines Innengewindes einer hier nicht dargestellten Schraubenmutter ausgebildet. Da sich jedoch die Steigung des Spindelgewindes 21 über die Längsachse, d.h. über den axialen Verlauf des Spindelbauteils 2 ändert, müsste, in Anpassung daran, die Steigung des Gewindes der Schraubenmutter ebenfalls entsprechend geändert sein. Dieses Problem wird erfindungsgemäß durch den Einsatz der frei beweglichen Gewindeelemente 4 anstelle des Gewindes der Schraubenmutter gelöst.

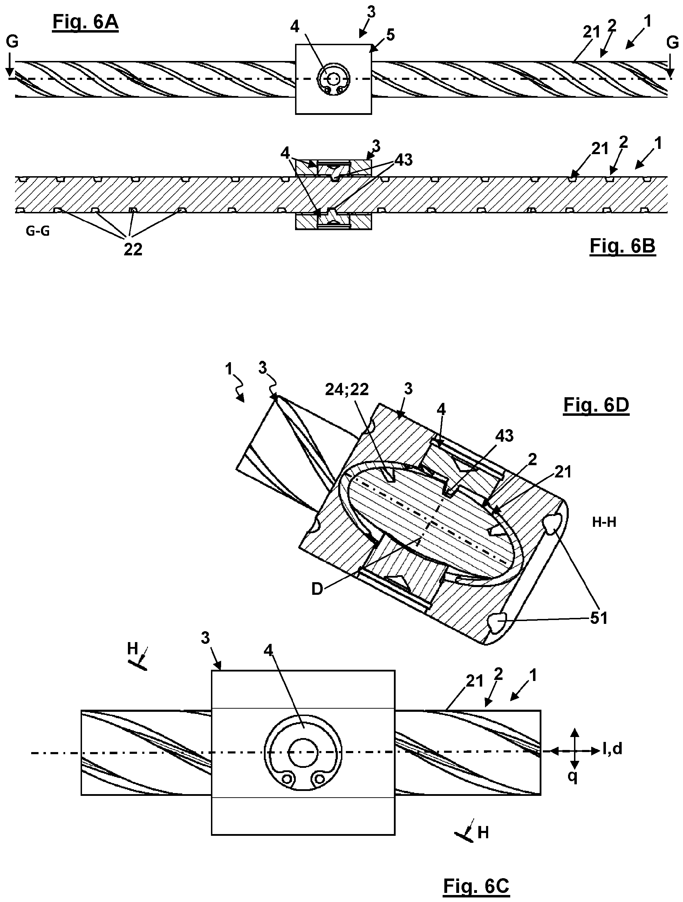

Mit der Änderung der Steigung ändert sich, bei gleich bleibendem Nenndurchmesser, auch die Bogenform oder der Radius der Gewindegänge. Zur Verdeutlich ist in Figur 6D eine Figur 6 entnommene Schnittansicht H-H dargestellt, wobei die Schnittebene parallel zur Steigung schräg zur Längsachse 1 des Spindelbauteils 2 verläuft. Figur 6C zeigt ihrerseits einen mittigen Bereich des Spindelgetriebes 1 gemäß Figur 6a mit dem Gewindebauteil 3, wobei die Steigung des Spindelgewindes 21 in diesem Bereich maximal ist. Das Spindelbauteil 2 mit dem Spindelgewinde 21 ist von der Grundform her ein gerader Kreiszylinder. Wird ein Kreiszylinder schräg zu seiner Zylinderachse geschnitten, so weist die hieraus resultierende Schnittfläche bekanntlich einen elliptischen Umriss mit zwei Durchmessern auf, d.h. einen größeren Durchmesser und einen kleineren Durchmesser D senkrecht zum größeren Durchmesser auf, wobei in Figur 6 zur besseren Lesbarkeit der Zeichnung lediglich der kleinere Durchmesser D gekennzeichnet ist.

Die Bogenform der umfänglichen Außenkontur des Gewindeabschnitts 41 ist der elliptischen Außenkontur des Spindelgewindes 21 an der Stelle des kleineren Durchmessers D angepasst. Die Anpassung erfolgt zugleich an der Stelle, an der die Steigung des Spindelgewindes über seinen axialen Verlauf maximal ist. Damit ist es zugleich die Stelle, an der der Radius der Bogenform der elliptischen Außenkontur des Spindelgewindes 21 maximal ist. Ein derartiger Radius R ist beispielgebend in den Figuren 8A und 9F eingezeichnet. Diese Maßnahmen sind günstig hinsichtlich der Reibungsminimierung und der Kraftübertragung der Getriebepartner im Betrieb.

Zum leichteren Abgleiten des Gewindeabschnitts 41 in der Gewinderille 24 des Spindelgewindes 21 und zur leichteren Änderung dessen Ausrichtung bei einer Steigungsänderung, ist der Gewindeabschnitt 41 der Gewindeelemente 4 bezüglich seiner Längserstreckung 1 in Richtung seines linienhaften Verlaufs sich beidendseitig verjüngend ausgebildet. Der Gewindeabschnitt 41 weist bezüglich seiner Längserstreckung eine linsenartige Längsschnittform auf.

Der Körper 5 weist für jedes Gewindeelement 4 eine bezüglich der Längsachse 1 radiale in Einbaulage in Querrichtung q verlaufende Aufnahmeöffnung 51 auf. In dieser ist das jeweils zugeordnete Gewindeelement 4 hier drehbeweglich angeordnet. Wie beispielsweise Figuren 1B und 3B entnehmbar, ist die Aufnahmeöffnung 51 als Durchgangsöffnung ausgebildet. Die Gewindeelemente 4 sind jeweils über ihre Basis 42 bezüglich der Öffnungsachse ö der radialen Aufnahmeöffnung 51 gleitdrehbeweglich oder wälzdrehbeweglich in der zugeordneten Aufnahmeöffnung 51 gelagert angeordnet. Hierzu weisen die Aufnahmeöffnung 51 und die Basis 42 des Gewindeelements 4 einander angepasste kreisrunde Querschnitte auf.

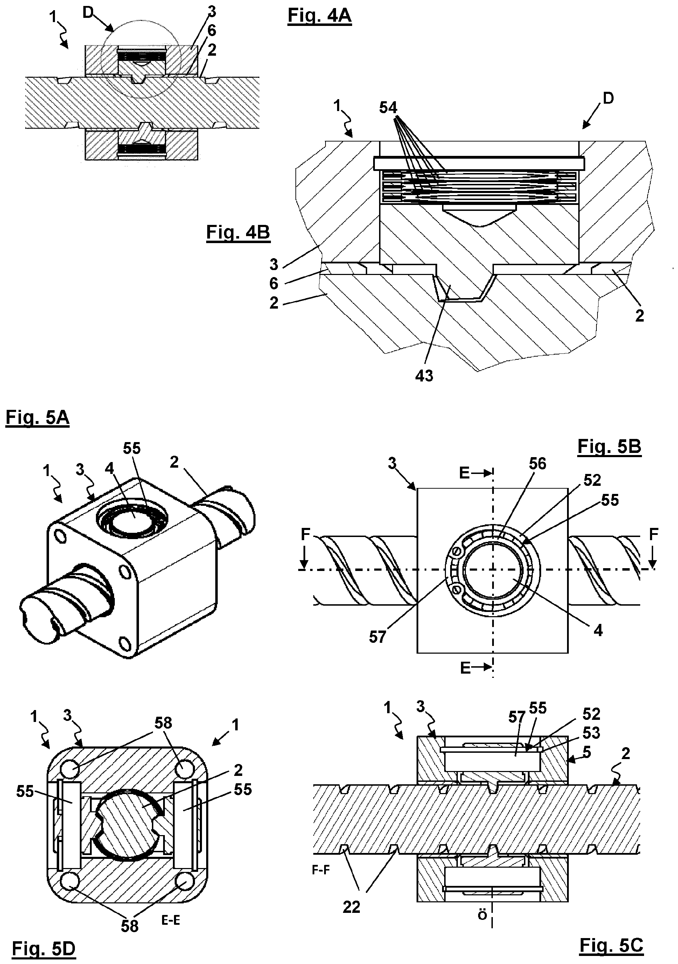

Bis auf der Ausführungsform des Spindelgetriebes 1 gemäß Figur 5 mit einer Wälzlagerung über ein Kugellager 55 für die Gewindeelemente 4 in den Aufnahmeöffnung 51, ist in den übrigen in der Zeichnung dargestellten Ausführungsformen des Spindelgetriebes 1 eine Gleitlagerung vorgesehen. Diese ist gegenüber der Wälzlagerung zwar kostengünstiger und unaufwändiger, verursacht aber eine höhere Reibung im Betrieb. In allen Ausführungsformen ist das Gewindeelement 4 gegen eine axiale Verschiebung in Richtung der Öffnungsachse ö radial nach außen gesichert. In den hier gezeigten Ausführungsformen des Spindelgetriebes 1 ist hierzu jeweils ein Simmering 52 vorgesehen. Dieser greift formschlüssig unter bezüglich der Öffnungsachse ö radialer Federvorspannung an vorgesehener Position, in der das zugehörige Gewindeelement 4 im ordnungsgemäßen Gewindeeingriff mit dem Spindelgewinde 21 des Spindelbauteil 2 gebracht angeordnet ist, in eine innenseitig der Aufnahmeöffnung 51 vorgesehene Innennut 53 ein.

In der Ausführungsform des Spindelgetriebes 1 gemäß Figur 4 ist zur Verminderung eines Spiels zwischen den Getriebepartnern 2;3 zusätzlich eine in Richtung zu dem Spindelgewinde 21 hin federelastische Lagerung der Gewindeelemente 4 vorgesehen. Beispielgebend sind hier sechs federtechnisch hintereinander angeordnete Tellerfedern 54 vorgesehen. Damit sind die Gewindeelemente 4 in Einbaulage jeweils radial vorgespannt angeordnet.

Hinsichtlich der in Figur 4 vorgesehenen Lagerung der Gewindeelement D4 über Kugellager 55 mit Innenring 56 und Außenring 57 ist vorgesehen, das die Gewindeelemente 4 jeweils bezüglich der Öffnungsachse ö der Aufnahmeöffnung 51 radial außen an dem Innenring 56 festgelegt sind. Der Außenring 57 des Kugellagers 55 ist innenseitig der Aufnahmeöffnung 51 an derselben bezüglich und hier auch axial zu dem Spindelgewinde 21 hin drehfest gehalten angeordnet.

In allen in der Zeichnung dargestellten Ausführungsformen des Spindelgetriebes 1 ist das Gewindebauteil 2 über zwei Gleitlagerhülsen 6 axial und umfänglich gleitverschieblich auf dem Spindelbauteil 2 gelagert. Die Gleitlagerhülsen 6 sind fest mit dem Gewindebauteil 2 verbunden. Die beiden Gleitlagerhülsen 6 sind bezüglich der Längsachse 1 unter Freilassung der Aufnahmeöffnungen 51 axial voneinander beabstandet angeordnet. Sie schließen axial beidendseitig bündig mit dem Gewindebauteil 3 ab.

In den hier gezeigten Ausführungsformen sind das Spindelbauteil 2, das Gewindebauteil 3 und das Gewindeelement 4 jeweils einstückig aus Kunststoff hergestellt.

Das Gewindebauteil 3 weist bezüglich seiner Außenkontur die Form eines geraden Prismas mit gleichen prismatischen Außenseitenfläche 32 auf, die jeweils senkrecht zur Querrichtung q angeordnet sind. Durch diese Maßnahme kann das Gewindebauteil 3 unaufwendig über zumindest eine der Außenseitenseitenflächen 32 gleitverschieblich und verdrehfest beispielsweise zu einem hier nicht dargestellten Gehäuse gehalten angeordnet sein. Hierzu kann dieser Außenseitenfläche 32 eine entsprechend angepasste Seitenfläche des Gehäuses zugeordnet sein. Die Anzahl an prismatischen Außenseitenfläche 32 ist so mit der Anzahl an Gewindeelemente 4 abgestimmt, dass die vorgesehenen Gewindeelemente 4 jeweils mittig zu der zugeordneten Außenseitenfläche 32 und umfänglich gleich beabstandet zueinander angeordnet sind. Ferner ist lediglich in die Außenseitenfläche 32 des Gewindebauteils 3 jeweils eine radiale Aufnahmeöffnung 51 eingebracht, für die auch jeweils ein Gewindeelement 4 vorgesehen ist. Dies ist vorteilhaft gegenüber einer möglichen Partikeleinbringung durch nicht genutzte Aufnahmeöffnung 51 in den Gewindeeingriff zwischen Gewindeelement 4 und Spindelgewinde 21.

Wie, bis auf Figur 3C, den Figuren 1-5 mit der Darstellung eines zweigängigen Spindelgewinde 21 entnehmbar, weist das Gewindebauteil 2 einen quadratischen Querschnitt auf, wobei an zwei bezüglich der Längsachse 1 einander gegenüberliegenden Außenseitenfläche 32, jeweils eine Aufnahmeöffnung 51 mit einem darin gelagerten Gewindeelement 4 vorgesehen ist.

Gemäß den Figuren 6-8 ist ein Spindelbauteil 2 mit einem viergängigen Spindelgewinde 21 vorgesehen. Entsprechend der Anzahl an Gewindegängen 22 sind vier Gewindeelemente 4 vorgesehen. Wie insbesondere den Ansichten des Gewindebauteils 3 gemäß den Figuren 7B und 7C entnehmbar, weist das Gewindebauteil 2 ebenfalls einen quadratischen Querschnitt auf, wobei zu jeder der Außenseitenflächen 32 ein Gewindeelement 4 zugeordnet ist.

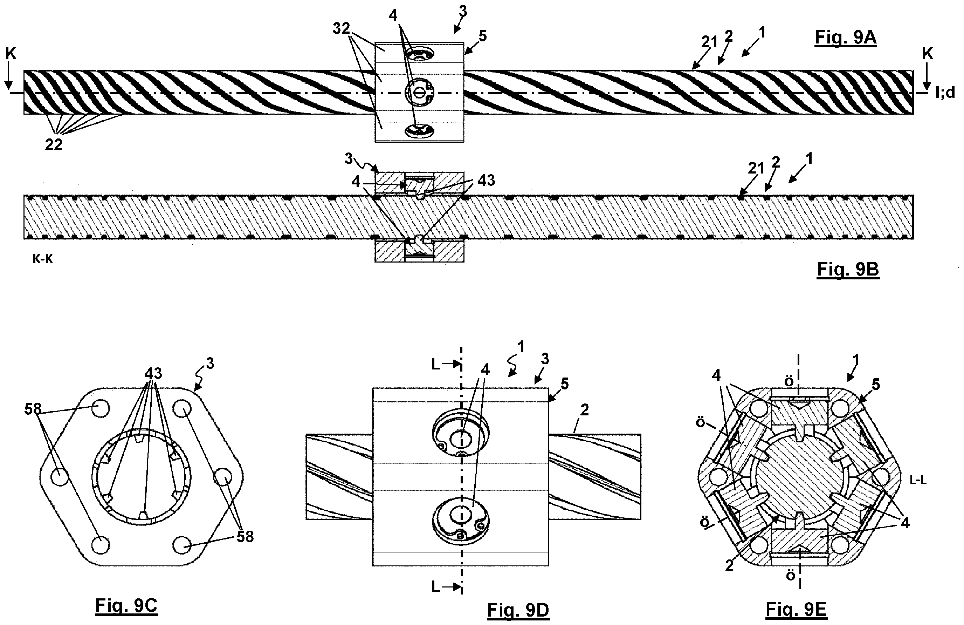

In Figur 9 wird ein Spindelgetriebe 1 mit einem sechsgängigen Spindelgewinde 21 dargestellt. Diesem angepasst, weist das Gewindebauteil einen hexagonalen Querschnitt auf, wobei jeder der damit sechs Außenseitenflächen 32 ein Gewindeelement 4 zugeordnet ist.

Ein Vergleich der oben beschriebenen Spindelgetriebe 1 mit zweigängigem, viergängigem bzw. sechsgängigem Spindelgewinde 21 zeigt, dass, wie üblich, der Durchmesser des Spindelbauteils 2 der Anzahl der Gewindegänge 22 angepasst ist, wobei ein optimaler Durchmesser mit der Anzahl der Gewindegänge 22 ansteigt. Damit sich die Gewindebauteile 3 mit ihrem jeweiligen Gewindeelement 4 sich im Einsatzlage nicht gegenseitig behindern, können sich die Gewindebauteile 3, abhängig von ihrer Anzahl, bezüglich ihrer zur Längsachse 1 umfänglichen Erstreckung über einen bestimmten umfänglichen Teilabschnitt erstrecken. Bei dem zweigängigen Spindelgewinde 21 und den damit notwendigen zwei Gewindeelemente 4 erstrecken sich die Gewindeelemente 4 jeweils bezüglich der Längsachse in Umfangsrichtung im Bogenmaß über <n/2 bzw. bezüglich des Nenndurchmessers über einen umfänglichen Bereich kleiner gleich 85% +/-5 %. Bei dem sechsgängigen Spindelbauteil gemäß Figur 9 erstecken sich die Gewindeelemente 4 jeweils bezüglich des Nenndurchmessers über einen umfänglichen Bereich kleiner gleich ≤ 60% ±5% des Nenndurchmessers des Spindelbauteils 2.

Der vergrößerte Durchmesser des Spindelbauteils 2 und die verringerte umfängliche Erstreckung der Gewindebauteile 3 mit steigender Anzahl an Gewindegängen 22 des Spindelgewinde 21 wird zudem an der konkaven Krümmung der Außenkontur des Gewindeabschnitts 41 deutlich, indem diese mit steigender Anzahl an Gewindegängen 22 flacher ausgebildet wird. Dies zeigt ein Vergleich des in Figuren 2C, 8A und 9F dargestellten Gewindeelements 4 für ein zweigängiges, viergängiges bzw. sechsgängiges Spindelgewinde 21.

Wie beispielsweise Figuren 3A und 3C entnehmbar, weist das Gewindebauteil 3 zur Längsachse 1 parallele jeweils als Durchgangsöffnung ausgebildete Befestigungsöffnungen 58 zum Anschluss an ein hier nicht gezeigtes Bauteil auf.

### Bezugszeichenliste

- 1: Spindelgetriebe
- 2: Spindelbauteil
- 21: Spindelgewinde
- 22: Gewindegang
- 23: Gewindezahn
- 24: Gewinderille
- 3: Gewindebauteil
- 31: Durchgangsöffnung
- 32: Außenseitenfläche
- 4: Gewindeelement
- 41: Gewindeabschnitt
- 42: Basis
- 43: Gewindezahnabschnitt
- 5: Körper
- 51: Aufnahmeöffnung
- 52: Simmerring
- 53: Innennut
- 54: Tellerfeder
- 55: Kugellager
- 56: Innenring
- 57: Außenring
- 58: Befestigungsöffnung
- 6: Gleitlagerhülse
- I-IV: Bereich
- a: Abstand
- d: Drehachse
- 1: Längsachse
- ö: Öffnungsachse
- q: Querachse
- D: Durchmesser
- G: Ganghöhe
- R: Radius
- α: Flankenwinkel

## Patentansprüche

1. Spindelgetriebe (1) mit einem Spindelbauteil (2) mit einem Spindelgewinde (21), das eine sich über eine Längsachse (l) des Spindelbauteils (2) verändernde Steigung aufweist, und mit einem in das Spindelgewinde (21) eingreifenden Gewindebauteil (3), wobei die beiden Bauteile (2;3) bezüglich der Längsachse (l) des Spindelbauteils (2) relativ zueinander verfahrbar sind und das Gewindebauteil (3) zumindest ein frei bewegliches Gewindeelement (4) aufweist, das in das Spindelgewinde (21) eingreift und sich im Betrieb selbsttätig der Gewindesteigung des Spindelgewindes (21) anpasst, wobei das Gewindeelement (4) einen Gewindeabschnitt (41) aufweist, der, jeweils bezüglich der Längsachse (l) des Spindelbauteils (2), in Arbeitslage Kraft übertragungswirksam in das Spindelgewinde (21) eingreift und der in Einbaulage an der dem Spindelgewinde (21) zugewandten Seite einer Basis (42) des Gewindeelements (4) angeordnet ist, wobei der Gewindeabschnitt (41) eine linienhafte Längserstreckung in Richtung des schraubenförmigen Verlaufs des Spindelgewindes (21) in Einbaulage aufweist und sich bezüglich der Längsachse des Spindelbauteils (2) in Umfangsrichtung bogenförmig erstreckt, **dadurch gekennzeichnet, dass** das Gewindebauteil (3) einen Körper (5) mit einer bezüglich der Längsachse (l) des Spindelbauteils (2) radialen als Durchgangsöffnung ausgebildeten und längs einer Öffnungsachse (ö) ausgerichteten Aufnahmeöffnung (51) aufweist, in der das Gewindeelement (4) über seine Basis (42) bezüglich der Öffnungsachse (ö) der Aufnahmeöffnung (51) gleitdrehbeweglich oder wälzdrehbeweglich gelagert angeordnet ist.

2. Spindelgetriebe (1) nach Anspruch 1, **dadurch gekennzeichnet, dass** der Gewindeabschnitt (41) einen Gewindezahnabschnitt (43) und/oder einen Gewinderillenabschnitt umfasst.

3. Spindelgetriebe (1) nach Anspruch 1 oder 2, **dadurch gekennzeichnet, dass** sich der Gewindeabschnitt (41) bezüglich der Längsachse (l) umfänglich über einen Bereich ≤ 85% ±5% oder über einen Bereich ≤ 60% ±5% jeweils des Nenndurchmessers des Spindelbauteils (2) erstreckt.

4. Spindelgetriebe (1) nach einem der Ansprüche 1 bis 3, **dadurch gekennzeichnet, dass** die dem Spindelbauteil (2) zugewandte zur Gewindeelement (4) umfängliche Außenkontur des Gewindeabschnitts (41) in Anpassung an eine Steigung des Spindelgewindes (21) konkav und ferner elliptisch ausgebildet ist.

5. Spindelgetriebe (1) nach Anspruch 4, **dadurch gekennzeichnet , dass** die Außenkontur der größten Steigung des Spindelgewindes (21) und ferner der elliptischen Schnittfläche eines Schnitts schräg zur Längsachse des Spindelgewindes (21) und in einer Ebene mit dessen Steigung angepasst ist, und zwar in dem Bereich, in dem die elliptische Schnittfläche den kleinsten Durchmesser (D) aufweist.

6. Spindelgetriebe (1) nach einem der Ansprüche 1 bis 5, **dadurch gekennzeichnet, dass** der Gewindeabschnitt (41) zu seiner leichteren Ausrichtung bei einer Steigungsänderung des Spindelgewindes (21) bezüglich seiner Längserstreckung sich beidendseitig verjüngend ausgebildet ist.

7. Spindelgetriebe (1) nach einem der Ansprüche 1-6, **dadurch gekennzeichnet, dass** , zur wälzdrehbeweglichen Lagerung des Gewindeelements (4), ein Wälzlager mit Innenring (56) und Außenring (57) vorgesehen ist, wobei das Gewindeelement (4) bezüglich der Öffnungsachse (ö) der Aufnahmeöffnung (51) radial außen an dem Innenring (57) des Wälzlagers festgelegt ist oder den Innenring (57) desselben bildet und wobei der Außenring (57) des Wälzlagers innenseitig der Aufnahmeöffnung (51) zumindest drehfest mit derselben verbunden ist.

8. Spindelgetriebe (1) nach einem der Ansprüche 1 bis 7, **dadurch gekennzeichnet, dass** das Gewindeelement (4) unter Federbelastung bezüglich der Längsachse (l) radial in das Spindelgewinde (21) eingreift.

9. Spindelgetriebe (1) nach einem der Ansprüche 1 bis 8, **dadurch gekennzeichnet, dass** das Gewindeelement (4) in Einbaulage gegen eine bezüglich der Öffnungsachse (ö) axiale Verschiebung in Richtung von dem Spindelgewinde (21) weg gesichert in der Aufnahmeöffnung (51) angeordnet ist.

10. Spindelgetriebe (1) nach einem der Ansprüche 1 bis 9, **dadurch gekennzeichnet, dass** der Körper (5) des Gewindebauteils (3) gleitverschieblich auf dem Spindelbauteil (2) gelagert angeordnet ist.

11. Spindelgetriebe (1) nach einem der Ansprüche 1 bis 10, **dadurch gekennzeichnet, dass** das Spindelgewinde (21) zumindest einen Gewindegang (22) umfasst, der über seine gesamte in der Längsachse (l) des Spindelbauteils (2) axiale Erstreckung einen stetigen Verlauf aufweist.

12. Spindelgetriebe (1) nach einem der Ansprüche 1 bis 11, **dadurch gekennzeichnet, dass** das Spindelgewinde (21) als Trapezgewinde ausgebildet ist.

13. Spindelgetriebe (1) nach einem der Ansprüche 1 bis 12, **dadurch gekennzeichnet, dass** das Spindelgewinde (21) des Spindelbauteils (2) einen oder zumindest zwei Gewindegänge (22) aufweist, wobei pro Gewindegang (22) ein Gewindeelement (4) vorgesehen ist.

14. Spindelgetriebe (1) nach Anspruch 13, **dadurch gekennzeichnet, dass** die zumindest zwei Gewindeelemente (4), jeweils bezüglich der Längsachse (l) des Spindelbauteils (2), auf gleicher Höhe und umfänglich gleich beabstandet an dem Körper (5) des Gewindebauteils (3) angeordnet sind.

15. Spindelgetriebe (1) nach Anspruch 13 oder 14, **dadurch gekennzeichnet, dass** die zumindest zwei Gewindeelemente (4) baugleich sind.

## Claims

1. A spindle gear (1) having a spindle component (2) with a spindle thread (21) having a pitch which varies over a longitudinal axis (I) of the spindle component (2) and having a thread component (3) which engages into the spindle thread (3), wherein the two components (2; 3) are displaceable relative to each other with respect to the longitudinal axis (I) of the spindle component (2) and the thread component (3) having at least one freely moveable thread element (4) which engages into the spindle thread (21) and in operation automatically adapts to the thread pitch of the spindle thread (21), wherein the thread element (4) has a thread portion (41) which, with respect to the longitudinal axis (I) of the spindle component (2), respectively engages into the spindle thread (21) in the working position in force-transmitting relationship and which, in the installation position, is arranged at the side of a base (42) of the thread element (4), that is towards the spindle thread (21), wherein the thread portion (41) has a linear longitudinal extent in the direction of the helical configuration of the spindle thread (21) in the installation position and extends in an arcuate configuration in the peripheral direction with respect to the longitudinal axis of the spindle component (2) **characterised in that** the thread component (3) has a body (5) with a receiving opening (51) designed radially as a through opening with respect to the longitudinal axis (I) of the spindle component (2) and is aligned along an opening axis (ö), in which receiving opening the thread element (4) is arranged by way of its base (42) to be mounted plain-bearing rotatably moveably or rolling-bearing rotatably moveably with respect to the opening axis (ö) of the receiving opening (51).

2. A spindle gear (1) as set forth in claim 1 **characterised in that** the thread portion (41) has a thread tooth portion (43) and/or a thread groove portion.

3. A spindle gear (1) as set forth in claim 1 or claim 2 **characterised in that** the thread portion (41) extends with respect to the longitudinal axis (I) peripherally over a region ≤ 85% + 5% or over a region ≤ 60% + 5% respectively of the nominal diameter of the spindle component (2).

4. A spindle gear (1) according to one of claims 1 through 3 **characterised in that** the outside contour of the thread portion (41) which is towards the spindle component (2) and which is peripheral with respect to the thread element (4) is of a concave and also elliptical configuration adapted to a pitch of the spindle thread (21).

5. A spindle gear (1) as set forth in claim 4 **characterised in that** the outside contour is adapted to the greatest pitch of the spindle thread (21) and further to the elliptical section surface of a cut inclinedly relative the longitudinal axis of the spindle thread (21) and in a plane with the pitch thereof, namely **in that** region, where the elliptical section surface is of the smallest diameter (D).

6. A spindle gear (1) as set forth in one of claims 1 through 5 **characterised in that** the thread portion (41) is of a tapering configuration at both ends in relation to its easier orientation in respect of a variation in pitch of the spindle thread (21) in relation to its longitudinal extent.

7. A spindle gear (1) as set forth in one of claims 1 through 6 **characterised in that** there is provided a rolling bearing with inner race (56) and outer race (57) for the rolling rotatably moveable mounting of the thread element (4), wherein the thread element (4) is fixed radially outwardly to the inner race (56) of the rolling bearing with respect to the opening axis (ö) of the receiving opening (51) or forms the inner race (56) of the rolling bearing and wherein the outer race (57) of the rolling bearing is at least non-rotatably connected to the receiving opening (51) at the inside thereof.

8. A spindle gear (1) as set forth in one of claims 1 through 7 **characterised in that** the thread element (4) engages under a spring loading radially into the spindle thread (21) with respect to the longitudinal axis (I).

9. A spindle gear (1) as set forth in one of claims 1 through 8 **characterised in that** in the installation position the thread element (4) is arranged secured in the receiving opening (51) against axial displacement with respect to the opening axis (ö) in the direction away from the spindle thread (21).

10. A spindle gear (1) as set forth in one of claims 1 through 9 **characterised in that** the body (5) of the thread component (3) is arranged mounted on the spindle component (2) in slidingly displaceable relationship.

11. A spindle gear (1) as set forth in one of claims 1 through 10 **characterised in that** the spindle thread (21) includes at least one thread flight (22) which is of a constant configuration over its entire extent axially in the longitudinal axis (I) of the spindle component (2).

12. A spindle gear (1) as set forth in one of claims 1 through 11 **characterised in that** the spindle thread (21) is in the form of a trapezoidal thread.

13. A spindle gear (1) as set forth in one of claims 1 through 12 **characterised in that** the spindle thread (21) of the spindle component (2) has one or at least two thread flights (22), a thread element (4) being provided for each thread flight (22).

14. A spindle gear (1) as set forth in claim 13 **characterised in that** the at least two thread elements (4), in each case with respect to the longitudinal axis (I) of the spindle component (2), are arranged at the same level and peripherally equally spaced on the body (5) of the thread component (3).

15. A spindle gear (1) as set forth in claim 13 or claim 14 **characterised in that** the at least two thread elements (4) are structurally identical.

## Revendications

1. Entraînement à broche (1) avec un composant de broche (2) avec un filet de broche (21) qui présente un pas qui varie sur un axe longitudinal (1) du composant de broche (2), et avec un composant fileté (3) qui s'engage dans le filet de broche (21), les deux composants (2; 3) étant déplaçables l'un par rapport à l'autre par rapport à l'axe longitudinal (1) du composant de broche (2) et le composant fileté (3) présentant au moins un élément fileté (4) librement mobile qui s'engage dans le filet de broche (21) et s'adapte automatiquement en fonctionnement au pas de filetage du filet de broche (21), l'élément fileté (4) présentant une section filetée (41) qui, respectivement par rapport à l'axe longitudinal (l) du composant de broche (2), s'engage dans le filet de broche (21) en position de travail en transmettant la force et qui, en position de montage, est disposée sur le côté d'une base (42) de l'élément fileté (4) qui est tourné vers le filet de broche (21), la section filetée (41) présentant une extension longitudinale linéaire en direction de l'allure hélicoïdale du filet de broche (21) en position de montage et s'étendant en forme d'arc par rapport à l'axe longitudinal de l'élément de broche (2) dans la direction périphérique, **caractérisé en ce que** le composant fileté (3) présente un corps (5) avec une ouverture de réception (51) réalisée sous forme d'ouverture de passage radiale par rapport à l'axe longitudinal (1) du composant de broche (2) et orientée le long d'un axe d'ouverture (ö), dans laquelle l'élément fileté (4) est disposé par l'intermédiaire de sa base (42) de manière à pouvoir effectuer une rotation de glissement ou une rotation de roulement par rapport à l'axe d'ouverture (ö) de l'ouverture de réception (51).

2. Entraînement à broche (1) selon la revendication 1, **caractérisé en ce que** la section filetée (41) comprend une section de denture de filetage (43) et/ou une section de rainure de filetage.

3. Entraînement à broche (1) selon la revendication 1 ou 2, **caractérisé en ce que** la section filetée (41) s'étend circonférentiellement par rapport à l'axe longitudinal (l) sur une plage de ≤ 85% ± 5% ou sur une plage de ± 60% ± 5% respectivement du diamètre nominal du composant de broche (2) .

4. Entraînement à broche (1) selon l'une des revendications 1 à 3, **caractérisé en ce que** le contour extérieur de la section filetée (41), tourné vers l'élément fileté (4), est concave et en outre elliptique, en adaptation à un pas du filetage du filet de broche (21).

5. Entraînement à broche (1) selon la revendication 4, **caractérisé en ce que** le contour extérieur est adapté au plus grand pas de filetage du filet de broche (21) et en outre à la surface de coupe elliptique d'une coupe oblique par rapport à l'axe longitudinal du filet de broche (21) et dans un plan avec son pas, et ce dans la zone dans laquelle la surface de coupe elliptique présente le plus petit diamètre (D).

6. Entraînement à broche (1) selon l'une des revendications 1 à 5, **caractérisé en ce que** la section filetée (41) est conçue de manière à se rétrécir des deux côtés par rapport à son extension longitudinale pour faciliter son alignement lors de la modification du pas de filetage du filet de broche (21) .

7. Entraînement à broche (1) selon l'une des revendications 1 à 6, **caractérisé en ce qu'**un palier à roulement avec une bague intérieure (56) et bague extérieure (57) est prévu pour le montage mobile en rotation par roulement de l'élément fileté (4), l'élément fileté (4) étant fixé radialement à l'extérieur de la bague intérieure (57) du palier à roulement par rapport à l'axe d'ouverture (ö) de l'ouverture de réception (51) ou formant la bague intérieure (57) du palier à roulement, et la bague extérieure (57) du palier à roulement étant reliée à l'intérieur de l'ouverture de réception (51) au moins de manière solidaire en rotation avec celle-ci.

8. Entraînement à broche (1) selon l'une des revendications 1 à 7, **caractérisé en ce que** l'élément fileté (4) s'engage radialement dans le filet de broche (21) sous sollicitation élastique d'un ressort par rapport à l'axe longitudinal (1).

9. Entraînement à broche (1) selon l'une des revendications 1 à 8, **caractérisé en ce que** l'élément fileté (4), en position de montage, est disposé dans l'ouverture de réception (51) de manière sécurisée contre un déplacement axial dans le sens de l'éloignement du filet de broche (21) par rapport à l'axe d'ouverture (ö).

10. Entraînement à broche (1) selon l'une des revendications 1 à 9, **caractérisé en ce que** le corps (5) du composant fileté (3) est monté de manière à pouvoir coulisser sur le composant de broche (2).

11. Entraînement à broche (1) selon l'une des revendications 1 à 10, **caractérisé en ce que** le filet de broche (21) comprend au moins un pas de filetage (22) qui présente une allure continue sur toute son extension axiale selon l'axe longitudinal (19) composant de broche (2).

12. Entraînement à broche (1) selon l'une des revendications 1 à 11, **caractérisé en ce que** le filet de broche (21) est conçu comme un filet trapézoïdal.

13. Entraînement à broche (1) selon l'une des revendications 1 à 12, **caractérisé en ce que** le filet de broche (21) du composant de de broche (2) présente un ou au moins deux pas de filetage (22), un élément fileté (4) étant prévu par pas de filetage (22).

14. Entraînement à broche (1) selon la revendication 13, **caractérisé en ce que** les au moins deux éléments filetés (4) sont disposés respectivement à la même hauteur par rapport à l'axe longitudinal (l) du composant de broche (2) et à la même distance circonférentielle sur le corps (5) du composant fileté (3).

15. Entraînement à broche (1) selon la revendication 13 ou 14, **caractérisé en ce que** les au moins deux éléments filetés (4) sont de construction identique.
